# EUROPÄISCHE PATENTSCHRIFT

(11) **EP 2 512 618 B1**
(45) Veröffentlichungstag und Bekanntmachung des Hinweises auf die Patenterteilung: **01.06.2016**
(21) Anmeldenummer: 10795279.8
(22) Anmeldetag: 09.12.2010
(51) Int. Cl.: B01D 46/00, B01D 46/52, B01D 46/54

(54) **KOMPAKTFILTER, VERFAHREN ZUR HERSTELLUNG EINES KOMPAKTFILTERS UND FILTERMEDIUM**
COMPACT FILTER, METHOD FOR PRODUCING A COMPACT FILTER AND FILTER MEDIUM
FILTRE COMPACT, PROCÉDÉ DE FABRICATION D'UN FILTRE COMPACT, ET MILIEU FILTRANT

(30) Priorität: 14.12.2009 DE 102009058067
(43) Veröffentlichungstag der Anmeldung: 24.10.2012
(73) Patentinhaber: Mann + Hummel GmbH, 71638 Ludwigsburg (DE)
(72) Erfinder: HEIM, Michael, 70825 Korntal-Münchingen (DE); SIEBER, Thomas, 84163 Marklkofen (DE); ROHRMEIER, Josef, 84082 Laberweinting (DE); GEHWOLF, Klaus, 94437 Mamming (DE); KRIEGER, Joachim-Paul, 94419 Reisbach (DE); EPLI, Sven, 74078 Heilbronn (DE); MAJER, Tanja, 74379 Ingersheim (DE); MORENO LINARES, Andrés, 71642 Ludwigsburg (DE); EISENGRÄBER-PABST, Jobst, 71720 Oberstenfeld (DE)
(86) Internationale Anmeldenummer: PCT/EP2010/069270
(87) Internationale Veröffentlichungsnummer: WO 2011/082933

(56) Entgegenhaltungen:
- WO-A1-2005/058461
- WO-A1-2007/035802
- DE-A1-102008 043 334
- US-A1- 2005 183 405
- US-A1- 2006 042 209
- US-A1- 2008 022 643

## Beschreibung

### Technisches Gebiet

Die Erfindung betrifft einen Kompaktfilter, insbesondere Kompaktluftfilter für Kraftfahrzeuge, mit einem Kompaktfilterelement zum austauschbaren Einsatz in einem Filtergehäuse, wobei das Kompaktfilterelement einen Filterkörper aus bahnförmigem Filtermedium umfasst, bei dem wenigstens eine glatte Filtermediumbahn und eine gewellte Filtermediumbahn aufeinander gelegt und wenigstens bereichsweise mittels Ultraschallverschweißung miteinander verbunden sind.

Die Erfindung betrifft außerdem ein Verfahren zur Herstellung eines Kompaktfilters, insbesondere Kompaktluftfilters für Kraftfahrzeuge, mit einem Kompaktfilterelement zum austauschbaren Einsatz in einem Filtergehäuse, bei dem ein Filterkörper des Kompaktfilterelements aus bahnförmigem Filtermedium gestaltet wird, wobei wenigstens eine glatte Filtermediumbahn und eine gewellte Filtermediumbahn aufeinander gelegt und wenigstens bereichsweise mittels Ultraschallverschweißung miteinander verbunden werden.

Die Erfindung betrifft ferner ein Filtermedium, insbesondere ein bahnförmiges Filtermedium, insbesondere eines Filterkörpers eines Kompaktfilterelements vorzugsweise zum austauschbaren Einsatz in einem Filtergehäuse eines Kompaktfilters, insbesondere Kompaktluftfilters für Kraftfahrzeuge, bei dem wenigstens eine glatte Filtermediumbahn und eine gewellte Filtermediumbahn aufeinander gelegt und wenigstens bereichsweise mittels Ultraschallverschweißung miteinander verbunden sind.

### Stand der Technik

Bei der Filtrierung von Luft finden verbreitet so genannte Kompaktfilter Einsatz, die insbesondere aus geschichtetem Filterpapier gebildet sind. Eine gewellte Filterpapierbahn ist auf eine glatte Filterpapierbahn aufgebracht. Dieses so gebildete Halbzeug wird zu einem Filterkörper gewickelt oder gestapelt, in dessen Folge eine Vielzahl von parallel zueinander verlaufenden Gaskanälen entsteht. Diese Gaskanäle sind wechselseitig durch Stopfen verschlossen. Einströmende Luft gelangt von der Rohseite aus in die eingangsseitig offenen Gaskanäle und wird durch die ausgangsseitigen Stopfen gezwungen, durch die Filterwände in die benachbarten Gaskanäle hindurch zu treten. Von dort gelangt die filtrierte Luft durch die ausgangsseitig offenen Gaskanäle zur Reinseite des Filters.

Aus der WO 2007/035802 A1 ist ein Filter und ein Verfahren zur Herstellung eines solchen bekannt. Der Filter entsteht durch Aufwickeln eines bahnförmigen Filtermediums. Das Filtermedium ist aus einer glatten Filtermediumbahn und einer gewellten Filtermediumbahn gebildet, welche mittels Ultraschallschweißen aneinander befestigt sind. Die Filterbahnen sind aus Polyester-Vlies. Die US 2005/0183405 A1 beschreibt einen Kompaktluftfilter mit einem Filtermedium, das zumindest eine Mikro- oder Nanofasergewebe in Kombination mit einem Substratmaterial in einer mechanisch stabilen Filterstruktur umfasst. Der WO 2005/058461 A1 ein Kompaktluftfilter mit einem Filtermedium zu entnehmen, das aus Zellulosefasern, Synthektikfasern oder beidem besteht. Durch die US 2006/0042209 A1 wird ein Kompaktluftfilter offenbart, der ein Filtermedium aus natürlichen und synthetischem Material aufweist.

Der Erfindung liegt die Aufgabe zugrunde, einen Kompaktfilter, ein Filterelement und ein Verfahren der eingangs genannten Art zu gestalten, mit dem einfach und zuverlässig ein Filter mit einer optimale Filterwirkung realisiert werden kann, der eine optimale Standzeit aufweist.

### Offenbarung der Erfindung

Diese Aufgabe wird erfindungsgemäß dadurch gelöst, dass wenigstens eine der Filtermediumbahnen aus einem Verbund aus wenigstens zwei Komponenten besteht, wobei wenigstens eine der Komponenten ein Synthetikmaterial und wenigstens eine der Komponenten ein Nicht-Synthetikmaterial ist.

Erfindungsgemäß ist also wenigstens eine der Filtermediumbahnen wenigstens zweilagig aus einem synthetischen mit einem nicht-synthetischen Material aufgebaut. Auf diese Weise werden die Vorteile eines synthetischen Filtermaterials mit den Vorteilen eines nicht-synthetischen Filtermaterials kombiniert. Synthetische Filtermaterialien können auf einfache Weise miteinander verschweißt werden. Auf die Verwendung eines separaten Klebstoffes zur Verbindung der Filtermediumbahnen kann so verzichtet werden, was den Materialaufwand und die damit verbundenen Kosten reduziert. Außerdem wird so die Gefahr von lokalen Verengung in den zwischen der gewellten und der glatten Filtermediumbahn gebildeten Kanälen reduziert, wie sie bei aus dem Stand der Technik bekannten Filtern bei der Fertigung des Halbzeugs durch längsverlaufende Haftspuren aus einem Schmelzkleber auf die glatte Filtermediumbahn hervorgerufen werden. Auf diese Weise werden Druckverluste in den Kanälen minimiert. Beim Verschweißen des Halbzeugs an den Wellspitzen der gewellten Filtermediumbahn hingegen bleiben die Kanäle frei. Ein weiterer Vorteil ist, dass Größe und Form von synthetischen Fasern und Schichtdicken von synthetischen Lagen einfach und genau vorgegeben werden können. Mit Nicht-Synthetikmaterialien hingegen können vorteilhafterweise dichte Filtermedien mit feinen Poren realisiert werden, mit denen auch kleinste Partikel aus dem zu filternden Fluid herausgefiltert werden. Der Verbund von Synthetikmaterial und Nicht-Synthetikmaterial erhöht vorteilhaft die Festigkeit des Halbzeugs im Vergleich zu herkömmlichen Filtermediumbahnen. So werden insbesondere Lagenablösungen im Halbzeug, was als Teleskopieren bezeichnet wird, verhindert. Zu solchen Lagenablösung kann es bei der Verwendung von aus dem Stand der Technik bekannten Kompaktfiltern in Fahrzeugen aufgrund von dort herrschenden Vibrationen kommen. Lagenablösungen können zu einem Versagen des Kompaktfilters führen. Vorteilhafterweise kann das Nicht-Synthetikmaterial Cellulose sein. Cellulose hat den Vorteil, dass es eine stabile Struktur aufweist und einfach mit flammhemmenden Eigenschaften ausgestattet werden kann. Die Porengröße einer Bahn aus Cellulose ist einfach, insbesondere durch Vorgabe der Faserdurchmesser, beim Herstellungsprozess anpassbar. Des weiteren hat Cellulose ein hervorragendes Preis-Leistungsverhältnis.

Erfindungsgemäß weist die wenigstens zweilagige Verbund-Filtermediumbahn einen Träger aus pflanzlichem Material, insbesondere Cellulose, mit einer Synthetikauflage, insbesondere einer Meltblown-Auflage, auf, wobei die Synthetikauflage der anderen Filtermediumbahn zugewandt ist. Durch die dreidimensionale Speicherstruktur der Meltblown-Auflage wird eine sehr gute Filtrationsleistung erreicht, was die Standzeiten des Filters erhöht. Versuche haben ergeben, dass die Standzeiten von Filtern mit Verbund-Filtermediumbahnen mit Meltblown-Auflagen höher sind als die Standzeiten von Filtern mit Verbund-Filtermediumbahnen mit derzeitigen Nanofaserbeschichtungen. Dennoch sind auch Verbund-Filtermediumbahnen mit Nanofaserbeschichtung herkömmlichen Filtermediumbahnen, die keinen Verbund aus Synthetikmaterial und Nicht-Synthetikmaterial aufweisen, filtertechnisch und was die Standzeiten angeht überlegen.

Vorteilhafterweise kann die Verbund-Filtermediumbahn mittels Laminierung mit Klebstoffen oder mittels Kalandrieren oder Ultraschallverschweißung der Komponenten realisiert sein. Derartige Verbund-Filtermediumbahnen halten auch erhöhten Anforderungen an die Verbundqualität stand, wie sie bei einem Fertigungsverfahren für die gewellte Filtermediumbahn erforderlich ist. Auf diese Weise werden lokale Ablösungen des Synthetikmaterials vom Nicht-Synthetikmaterial verhindert, welche zu einer Verengung der Kanäle zwischen der glatten und der gewellten Filtermediumbahn führen. Besonders im Eintrittsbereich der Kanäle ist es wichtig, eine hohe Verbundqualität zu realisieren, um eine Ablösung zu verhindern, bei der Materialbereiche umklappen und den betreffenden Kanal nahezu vollständig verschließen könnten. Der Verbund und seine Qualität sind aus diesem Grund ein wesentlicher Teil der Verbund-Filtermediumbahn. Das Ultraschallverschweißen von Meltblown und Cellulose mit einer Punktdichte von mehr als 5% des Flächenverbundes hat sich als geeignete Verbindungsmethode herausgestellt: Alternativ ist insbesondere bei der Verwendung von Flammhemmend ausgerüsteten Filtermedien, vorzugsweise Celluloseträgern mit flammhemmenden Eigenschaften, eine Realisierung des Verbundes mittels Laminierung mit Klebstoff gut geeignet. Das Laminieren kann insbesondere unter Verwendung eines Sprühklebers oder einer feinen Gravurwalze gleichmäßig und flächig erfolgen.

Der mittlere Durchmesser von Fasern des Synthetikmaterials kann vorteilhafterweise zwischen 0,5 µm und 20 µm betragen. Umfangreiche Versuche haben ergeben, dass auf diese Weise mit Meltblown-Auflagen eine sehr effiziente dreidimensionale Speicherstruktur realisiert wir, in der Partikel nicht nur auf der Oberfläche abgeschieden werden, wie dies bei einem mit Nanofasern beschichteten Filtermedium der Fall ist. Im Vergleich insbesondere zu einer Nanofaserbeschichtung kann so mit einer Meltblown-Auflage eine größere Schichtdicke realisiert werden.

Bei einer weiteren vorteilhaften Ausführungsform kann das Synthetikmaterial eine unimodale Verteilung der Faserdurchmesser aufweisen und eine Schichtdicke des Synthetikmaterials kann etwa zwischen dem 20-fachen und dem 300-fachen des mittleren Faserdurchmessers betragen. Versuche haben ergeben, dass sich ein Flächengewicht des Synthetikmaterials von mehr als etwa 4 g/m² besonders günstig in Hinblick auf die Filtrationsleistung und die Qualität der Verbindung der Filtermedienbahnen mittels Ultraschallverschweißung auswirkt.

Vorteilhafterweise kann das Synthetikmaterial eine bimodale Verteilung der Faserdurchmesser mit zwei unterschiedlichen mittleren Faserdurchmessern, insbesondere von 3 µm bis 20 µm und unter 1 µm, aufweisen. Auf diese Weise können die größeren Fasern mit mittleren Durchmessern von 3 µm bis 20µm eine Stützfunktion ausüben. Die kleineren Fasern mit Durchmessern unter 1 µm können zu einer Oberflächenvergrößerung und damit einer verbesserten Filtrationsleistung beitragen.

Um weitere Verbesserung in Hinblick auf die Stabilität und die Filtrationsleistung zu erzielen, kann eine Schichtdicke des Synthetikmaterials etwa zwischen dem 25-fachen und dem 300-fachen des kleinsten mittleren Faserdurchmessers, insbesondere zwischen 25 µm und 300 µm, betragen.

Bei einer weiteren vorteilhaften Ausführungsform kann eine Schichtdicke des Nicht-Synthetikmaterials etwa zwischen 150 µm und 660 µm betragen. Derartige Materialstärken können in der Fertigung gut gehandhabt werden. Auf diese Weise können außerdem die Druckverluste des Filterelements in einem für die Filtrierung optimalen Bereich gehalten werden, da bei diesen Schichtdicken ein optimaler Anteil der Anströmfläche durch Nicht-Synthetikmaterial abgedeckt werden kann.

Die glatte Filtermediumbahn und die gewellte Fütermediumbahn können vorteilhafterweise entlang von durchgängigen oder unterbrochenen Verbindungslinien miteinander verbunden sein. Bevorzugt verlaufen die Verbindungslinien auf den Wellspitzen der gewellten Filtermediumbahn. Ein Vorteil der Wellspitzverschweißung ist, dass durch die Verschweißung in Längsrichtung beim Halbzeug keine Filterfläche verloren geht, da der Bereich der Wellspitze, an der die glatte und die gewellte Filtermediumbahn miteinander verbunden sind, ohnehin nur in geringem Maße durchströmt wird. Bei einer Verbindung mittels Ultraschallschweißen hat sich insbesondere eine unterbrochene Verschweißung als günstig herausgestellt. Die Unterbrechungen in einer Schweißlinie haben dabei bevorzugt eine jeweilige Länge von etwa 10 mm. Die Breite der Schweißlinien beträgt vorzugsweise etwa 0,5 mm bis 1 mm. Der Abstand zwischen zwei benachbarten Schweißlinien an benachbarten Wellspitzen beträgt vorzugsweise etwa 6,1 mm bis 7 mm. Die Verbindungslinien können gerade oder gekrümmt sein.

Bei einer weiteren vorteilhaften Ausführungsform können durch die glatte Filtermediumbahn und die gewellte Filtermediumbahn begrenzte Kanäle jeweils an einem Ende verschlossen, insbesondere mit Hotmelt abgedichtet oder mittels Ultraschallschweißen zugeschweißt, sein. Auf diese Weise wird das zu filtrierende Fluid gezwungen, die Kanalwände zu durchströmen. Hotmelt ist ein zum Versiegeln oder Kleben üblicherweise verwendeter Werk- oder Klebstoff, der bei normaler Temperatur fest ist, aber beim Erwärmen in eine flüssige Schmelze übergeht. Das Verschließen mittels Ultraschallschweißen hat den Vorteil, dass kein zusätzlicher Klebstoff benötigt wird.

Um die Entflammbarkeit des Kompaktfilters zu verringern, kann vorteilhafterweise wenigstens eine der Filtermediumbahnen flammhemmende Eigenschaften aufweisen.

Die technische Aufgabe wird erfindungsgemäß verfahrenstechnisch dadurch gelöst, dass wenigstens eine der Filtermediumbahnen aus einem Verbund aus wenigstens zwei Komponenten aufgebaut wird, wobei wenigstens eine der Komponenten ein Synthetikmaterial und wenigstens eine der Komponenten ein Nicht-Synthetikmaterial ist. Die im Zusammenhang mit dem erfindungsgemäßen Kompaktfilter oben bereits aufgezählten Vorteile gelten für das Verfahren entsprechend.

Zur Herstellung der Verbund-Filtermediumbahn wird eine Synthetikauflage, insbesondere eine Meltblown-Auflage, auf einen Träger aus pflanzlichem Material, insbesondere Cellulose, aufgebracht, wobei die Synthetikauflage auf der Seite des Trägers aufgebracht wird, die später der anderen Filtermediumbahn zugewandt ist.

Die Aufgabe wird erfindungsgemäß außerdem durch das Filtermedium gelöst, bei dem wenigstens eine der Filtermediumbahnen aus einem Verbund aus wenigstens zwei Komponenten aufgebaut ist, wobei wenigstens eine der Komponenten ein Synthetikmaterial und wenigstens eine der Komponenten ein Nicht-Synthetikmaterial ist. Die oben genannten Vorteile des erfindungsgemäßen Kompaktfilters gelten für das Filtermedium entsprechend.

Die Verbund-Filtermediumbahn weist einen Träger aus pflanzlichem Material, insbesondere Cellulose, mit einer Synthetikauflage, insbesondere einer Meltblown-Auflage, auf, wobei die Synthetikauflage der anderen Filtermediumbahn zugewandt ist.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert ist. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch in Perspektivansicht einen Kompaktfilter mit einem Kompaktfilterelement aus einem bahnförmigen Filtermedium, bei dem eine glatte und eine gewellte Filtermediumbahn aus Celluloseträgern mit Meltblown-Auflagen aufeinander gelegt und miteinander verbunden sind;
- Figur 2: schematisch einen Schnitt durch das bahnförmige Filtermedium aus der Figur 1;
- Figur 3: einen Druckverlauf bei dem Filtermedium aus der Figur 1 bei einer Beladung mit Teststaub ISO im Vergleich zu einem Druckverlauf bei einem Filtermedium mit einem Celluloseträger ohne Meltblown-Auflagen;
- Figur 3a: einen Druckverlauf bei dem Kompaktfilterelement aus der Figur 1 bei einer Beladung mit Ruß im Vergleich zu einem Druckverlauf bei einem Kompaktfilterelement mit einem Celluloseträger ohne Meltblown-Auflagen;
- Figur 4: eine Vorrichtung zur Herstellung des bahnförmigen Filtermediums aus den Figuren 1 und 2.

In den Figuren sind gleiche Bauteile mit gleichen Bezugszeichen versehen.

### Ausführungsform(en) der Erfindung

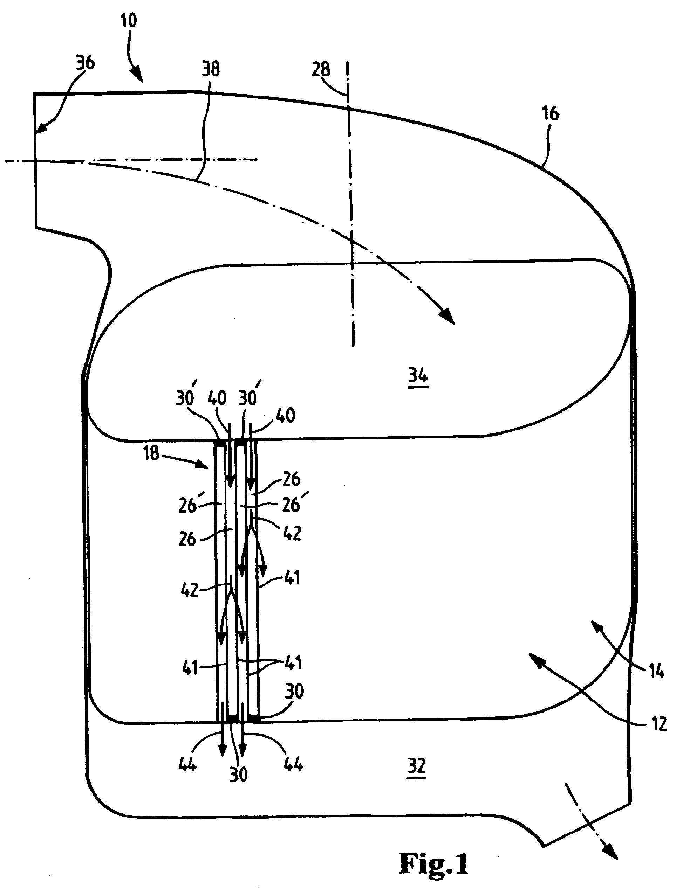

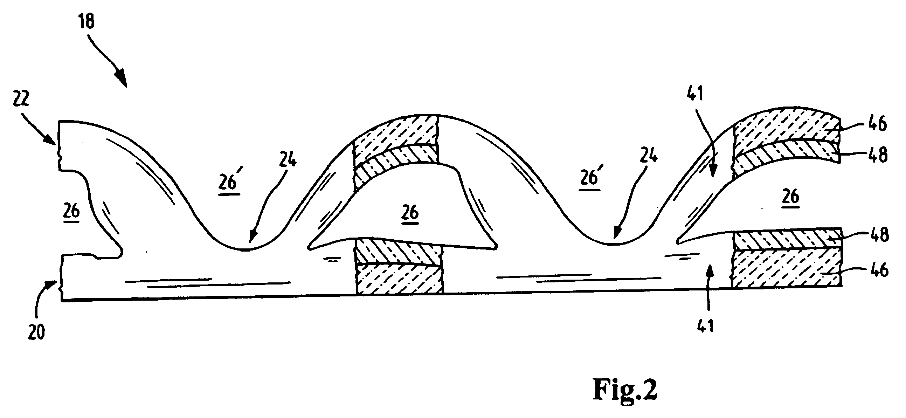

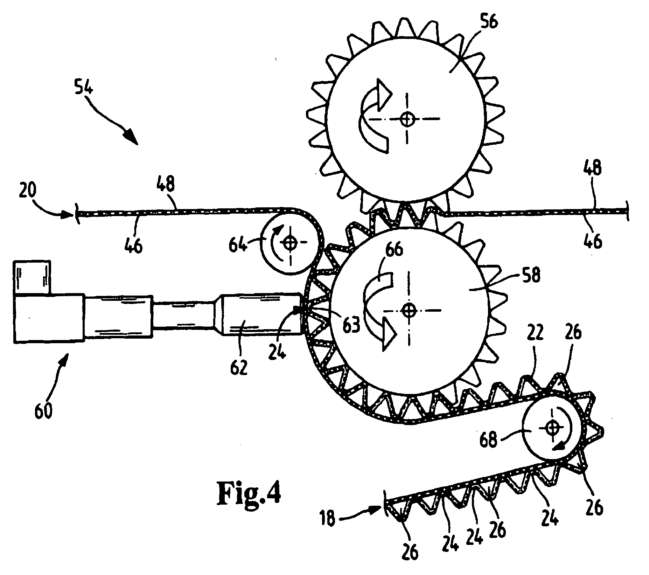

Figur 1 zeigt in schematischer Perspektivansicht einen Kompaktfilter 10, der als Kompaktluftfilter für ein Kraftfahrzeug ausgebildet ist. Der Kompaktfilter 10 umfasst ein Kompaktfilterelement 12 mit einem Filterkörper 14 und ein schematisch angedeutetes Filtergehäuse 16. Das Filtergehäuse 16 ist in nicht näher dargestellter Weise teilbar, um in bestimmten Wartungsintervallen das Kompaktfilterelement 12 austauschen zu können. Der Filterkörper 14 ist aus bahnförmigem Filtermedium 18 gebildet. Das bahnförmige Filtermedium 18 besteht aus je einer glatten Filtermediumbahn 20 und einer gewellten Filtermediumbahn 22, die mittels Ultraschallverschweißung an Wellspitzen 24 der gewellten Filtermediumbahn 22 entlang von durchgängigen Verbindungskurven miteinander verbunden sind. Der Aufbau des bahnförmigen Filtermediums 18 ist in den Figuren 2 und 4 gezeigt. Aus einem derart gebildeten Halbzeug wird der Filterkörper 14 durch Wickeln, Stapeln oder Falten gebildet, derart, dass abwechselnd eine glatte Filtermediumbahn 20 und eine gewellte Filtermediumbahn 22 aufeinander gelegt sind. Die wechselseitig aneinander angrenzenden gewellten Filtermediumbahnen 22 und glatten Filtermediumbahnen 20 erzeugen aufgrund ihrer Schichtfolge eine Vielzahl von Gaskanälen 26 und 26', die parallel zu einer Längsachse 28 des Filterkörpers 14 verlaufen. Der Filterkörper 14 ist nahezu vollständig von Gaskanälen 26 und 26' durchsetzt. Der besseren Übersichtlichkeit halber sind jedoch nur einige wenige Gaskanäle 26 und 26' in schematischer Längsschnittdarstellung als Prinzipskizze gezeigt.

Benachbarte Gaskanäle 26 und 26' sind wechselseitig mit Hotmelt 30 und 30' dicht verschlossen. Jeder eingangsseitige Gaskanal 26, der an seinem einer Reinseite 32 des Kompaktfilters 10 angrenzenden Ende mit Hotmelt 30 verschlossen ist, liegt benachbart zu je einem ausgangsseitigen Gaskanal 26' , der an seinem einer Rohseite 34 des Kompaktfilters 10 zugewandten Ende mit Hot 30' verschlossen ist. Beispielhaft sind die ausgangsseitigen Gaskanäle 26' die Gaskanäle des bahnförmigem Filtermediums 18. Die eingangsseitigen Gaskanäle 26sind die Gaskanäle, die durch aufeinanderlegen von zwei benachbarten Schichten aus bahnförmigem Filtermedium 18 entstehen. Auch der umgekehrte Fall ist möglich, bei dem die eingangsseitigen Gaskanäle die Gaskanäle des bahnförmigem Filtermediums sind.

Das Filtergehäuse 16 weist eine Einströmöffnung 36 auf, durch die staubbehaftete Luft entsprechend einem Pfeil 38 zur Rohseite 34 des Kompaktfilterelements 12 strömt. Dort tritt die staubbehaftete Luft in die eingangsseitig offenen Gaskanäle 26 ein, wie dies durch Pfeile 40 angedeutet ist. Dieser eingangsseitige Luftstrom wird durch den ausgangsseitigen Hotmelt 30 aufgestaut. Die eingangsseitigen Gaskanäle 26 und die ausgangsseitigen Gaskanäle 26' sind durch Filterwände 41 aus den Filtermediumbahnen 20 beziehungsweise 22 voneinander getrennt. Infolge der vorgenannten Stauwirkung tritt der eingangsseitige Luftstrom entsprechend Pfeilen 42 durch die Filterwände 41 hindurch und in die ausgangsseitigen Gaskanäle 26' ein. Hierbei wird die hindurchtretende Luft von Staubpartikeln gereinigt und tritt als gereinigte Luft entsprechend Pfeilen 44 aus den ausgangsseitigen Gaskanälen 26' zur Reinseite 32 hin aus. Der eingangsseitige Hotmelt 30' verhindern eine Rückströmung zur Rohseite 34.

Die Filtermediumbahnen 20 und 22 sind Verbund-Filtermediumbahnen, die jeweils aus einem Verbund aus einem Celluloseträger 46 mit einer Meltblown-Auflage 48 bestehen. Die Meltblown-Auflage 48 ist mittels Laminierung mit Klebstoff mit dem Celluloseträger 46 verbunden.

Die Meltblown-Auflage 48 weist eine unimodale Verteilung der Faserdurchmesser mit einem mittleren Faserdurchmesser zwischen etwa 0,5 µm und 20 µm auf. Die Schichtdicke der Meltblown-Auflage 48 beträgt etwa zwischen dem 25-fachen und dem 300-fachen des mittleren Faserdurchmessers. Das Flächengewicht ist größer als etwa 4 g/m².

Die Schichtdicke des Celluloseträgers 46 beträgt etwa zwischen 150 µm und 660 µm.

Die Celluloseträger 46 sind flammhemmend behandelt, so dass die Filtermediumbahnen 20 und 22 flammhemmende Eigenschaften aufweisen.

Die Meltblown-Auflage 48 wirkt auf der Anströmseite des fertigen Kompaktfilterelements 12 als hochabscheidende Tiefenfilterschicht. Bei der Fertigung mittels Ultraschallverschweißen fungiert die Meltblown-Auflage 48 außerdem als Klebstoff zur Fixierung der gewellten Filtermediumbahn 22 an der glatten Filtermediumbahn 20.

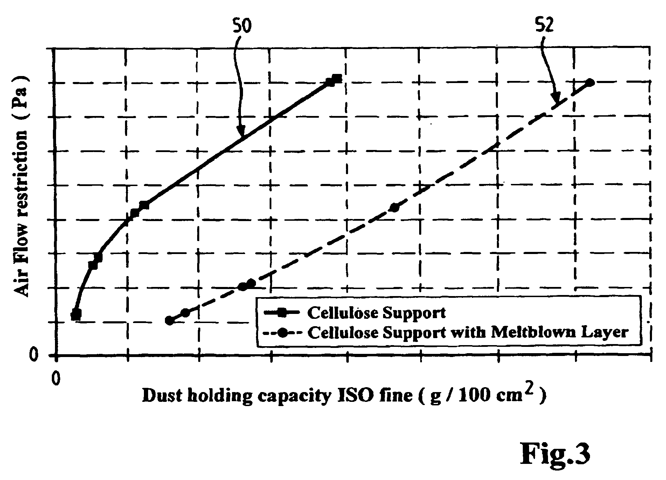

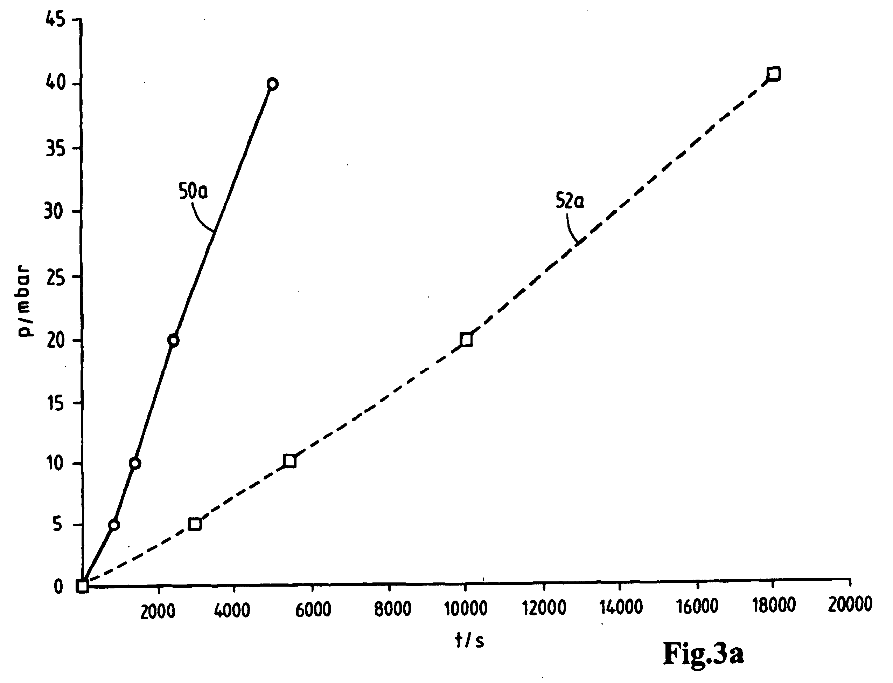

Beim Betrieb des Kompaktfilterelements 12 wirkt zur Reinigung der Luft die Meltblown-Auflage 48 mit dem Celluloseträger 46 zusammen. In der Figur 3 sind beispielhaft Druckverläufe von Celluloseträgern 46 mit und ohne Meltblown-Auflagen 48 bei einer Beladung mit Teststaub ISO (International Organization for Standardization) im Vergleich gezeigt. In dem Koordinatensystem ist die Staubbeladung der Filtermediumbahnen 20 und 22 in Richtung der horizontalen Achse und der Druckverlustanstieg zwischen der Rohseite und der Reinseite des Filtermediums 18 in Richtung der vertikalen Achse jeweils linear skaliert dargestellt. Der Graph 50 in der Figur 3 links entspricht dem Druckverlauf bei Verwendung von Filtermediumbahnen mit Celluloseträgern ohne Meltblown-Auflage. Der Graph 52 in der Figur 3 rechts entspricht dem Druckverlauf bei der Verwendung von Celluloseträgern 46 mit Meltblown-Auflagen 48.

Bei der Beladung mit Teststaub ISO kommt es bei den Celluloseträgern 46 mit Meltblown-Auflage 48 später zu einem Druckanstieg durch Staubeinlagerung als bei den Celluloseträgern 46 ohne Meltblown-Auflage 48. Der Druckanstieg bei den Celluloseträgern 46 mit Meltblown-Auflagen 48 ist außerdem geringer als bei den Celluloseträgern ohne Meltblown-Auflagen.

Bei den Celluloseträgern 46 ohne Meltblown-Auflage 48 wird der Verlauf des Druckanstiegs wieder flacher, sobald sich ein Staubkuchen an der Oberfläche gebildet hat und der weitere Druckanstieg primär durch das Wachstum der Staubschicht an der Oberfläche der Celluloseträger 46 verursacht wird.

Bei den Celluloseträgern 46 mit Meltblown-Auflage 48 wird durch die Meltblown-Auflage 48 ein Großteil der Staubpartikel zurückgehalten, so dass die Einlagerung von Staubpartikeln in dem Celluloseträgern 46 entsprechend reduziert wird. Das Risiko der Verblockung von feinen Poren der dichten Celluloseträger 46 wird auf diese Weise reduziert. Dies führt von Beginn an zu einem deutlich flacheren Verlauf des Druckanstiegs als bei den Celluloseträgern 46 ohne Meltblown-Auflage 48. Dies wirkt sich insgesamt vorteilhaft auf die Filtration aus. Zudem erhöht sich durch die Meltblown-Auflage 48 auch der Abscheidegrad für Staub, was ebenfalls vorteilhaft ist.

In der Figur 3a sind beispielhaft Druckverläufe von Celluloseträgern 46 mit und ohne Meltblown-Auflagen 48 bei einer Beladung mit Ruß im Vergleich gezeigt. Im Unterschied zu der in der Figur 3 gezeigten Situation, ist hier der Druckverlustanstieg zwischen der Rohseite 34 und der Reinseite 32 des Kompaktfilterelements 12 gezeigt. Wie in der Figur 3 ist in dem Koordinatensystem der Druckverlustanstieg in Richtung der vertikalen Achse linear skaliert dargestellt. Im Unterschied zur Figur 3 ist in Richtung der horizontalen Achse linear skaliert die Berußungsstandzeit dargestellt. Der Ruß hat eine mittlere Partikelgröße von 95 nm und ist vergleichbar mit den von Dieselmotoren erzeugten Rußpartikeln. Der Graph 50a in der Figur 3a links entspricht dem Druckverlauf bei Verwendung von Filtermediumbahnen mit Celluloseträgern ohne Meltblown-Auflage. Der Graph 52a rechts entspricht dem Druckverlauf bei der Verwendung von Celluloseträgern 46 mit Meltblown-Auflagen 48. Ansonsten gelten die oben in Verbindung mit der Figur 3 gemachten Erläuterungen zu den Druckverläufen hier entsprechend.

In der Figur 4 ist eine Vorrichtung 54 zur Herstellung des bahnförmigen Filtermediums 18 dargestellt. Die glatte Filtermediumbahn 20 und die gewellte Filtermediumbahn 22, die zunächst ebenfalls glatt ist, werden jeweils vorzugsweise in Form von Endlosbahnen bereitgestellt. Die Wellung der gewellten Filtermediumbahn 22 erfolgt in einem Prägebereich eines Paares von Riffelwalzen 56 und 58, welche sich gegenläufig drehen. Die in der Figur 4 untere Führungs-Riffelwalze 58 führt die gewellte Filtermediumbahn 22 nach der Prägung bis etwa über ihren halben Umfang mit. Die Meltblown-Auflage 48 befindet sich dabei auf der der Führungs-Riffelwalze 58 abgewandten Seite der gewellten Filtermediumbahn 22.

Die Riffelwalzen 56 und 58 sind in der Form Zahnrädern ähnlich, nur sehr viel breiter. Die Riffelwalzen 56 und 58 sind mit ineinandergreifenden Kurven zur Erzeugung der Welle versehen. Die Kurven auf den Riffelwalzen bestimmen die Wellenform und -höhe der gewellten Filtermediumbahn 22.

In Drehrichtung (Pfeil 66) der Führungs-Riffelwalze 58 hinter dem Prägebereich befindet sich eine Ultraschallschweißeinheit 60. Die Ultraschallschweißeinheit 60 verfügt über eine Ultraschallsonotrode 62, welche an dem bei der Drehung der Führungs-Riffelwalze 58 ihr jeweils zugewandten Kurvenkopf 63 der Führungs-Riffelwalze 58 angreift.

Die glatte Filtermediumbahn 20 wird über eine Umlenkrolle 64 der Führungs-Riffelwalze 58 zugeführt und in Drehrichtung 66 der Führungs-Riffelwalze 58 vor der Ultraschallsonotrode 62 auf die gewellte Filtermediumbahn 22 gelegt. Dabei ist die Meltblown-Auflage 48 der glatten Filtermediumbahn 20 der gewellten Filtermediumbahn 22 zugewandt.

Die aufeinandergelegten Filtermediumbahnen 20 und 22 werden mit der Führungs-Riffelwalze 58 mitgenommen. Die jeweils auf dem der Ultraschallsonotrode 62 zugewandten Kurvenkopf 63 befindliche Wellspitze 24 der gewellten Filtermediumbahn 22 wird mittels der Ultraschallsonotrode 62 mit der glatten Filtermediumbahn 20 verschweißt. Die Ultraschallsonotrode 62 hämmert hierzu mit Ultraschallfrequenz auf den Kurvenkopf 63. Durch die hohen Temperaturen die dabei entstehen, heizen sich die zwischen der Ultraschallsonotrode 62 und dem Kurvenkopf 63 befindlichen Bereiche der Filtermediumbahnen 20 und 22 lokal auf, so dass die Meltblown-Auflagen 48 schmelzen. Die Meltblown-Auflagen 48 dringen ineinander und in die Matrizen der beiden Celluloseträger 46 ein. Durch das anschließende Erstarren verbinden die Meltblown-Auflagen 48 die Filtermediumbahnen 20 und 22 fest miteinander.

Die Ultraschallsonotrode 62 ist so gestaltet, dass sie die Filtermediumbahnen 20 und 22 entlang einer durchgängigen Verbindungslinie auf dem Kurvenkopf 63 der Führungs-Riffelwalze 58 verschweißt. Die Verbindungslinie verläuft in dem Ausführungsbeispiel parattel zur Drehachse der Führungs-Riffelwalze 58.

In Drehrichtung 66 der Führungs-Riffelwalze 58 hinter der Ultraschallsonotrode 62 wird das bahnförmige Filtermedium 18 über eine Ablenkrolle 68 einer weiteren, nicht gezeigten Verarbeitungseinrichtung zugeführt. Mit der Verarbeitungseinrichtung werden die Gaskanäle 26 des bahnförmigen Filtermediums 18 einseitig mit dem Hotmelt 30 dicht verschlossen. Das Verschließen der Gaskanäle 26' mit dem Hotmelt 30' auf der anderen Seite geschieht später beim Gestalten des Filterkörpers 14.

Die Herstellung des Kompaktfilters 10 im Ganzen wird im folgenden beschrieben:

Die Cellulose-Trägerbahnen 46 werden mit flammhemmenden Eigenschaften ausgestattet.

Die Cellulose-Trägerbahnen 46 werden mit den Meltblown-Auflagen 48 versehen.

Aus den so gefertigten Filtermediumbahnen 20 und 22 wird anschließend in der oben beschriebenen Weise mit der Vorrichtung 54 das bahnförmige Filtermedium 18 hergestellt.

Aus dem bahnförmigen Filtermedium 18 wird der Filterkörper 14 des Kompaktfilterelements 12 gestaltet, vorzugsweise gewickelt oder geschichtet. Dabei werden auch die Gaskanäle 26' einseitig mit dem Hotmelt 30' verschlossen. Zusätzlich können quer zu den Gaskanälen 26 und 26'verlaufende, flache Hotmelt-Haftspuren verwendet werden, die den Filterkörper 14 zusätzlich zusammenhalten. Bei der Gestaltung des Kompaktfilterelements 12 kann vorzugsweise ein vernetzender, insbesondere chemisch nachvernetzender, Hotmelt (reaktiver Klebstoff) insbesondere als Hotmelt 30' verwendet werden. Vernetzender Hotmelt hat den Vorteil , dass er nach abgeschlossener Vernetzung (Reaktion) nicht mehr bei hohen Temperaturen erweicht. Die Verwendung eines reaktiven Klebstoffes führt in Kombination mit der Ultraschallverschweißung vorteilhafterweise zu einem Filterkörper 14, der auch bei höheren Temperaturen stabil ist. So kann es auch bei höheren Temperaturen, insbesondere Temperaturen größer als 80 °C, nicht zu einem drastischen Erweichen des Hotmelts (Klebstoffes) kommen, was ein Teleskopieren des Filterkörpers 14 zur Folge haben kann und zu einem Versagen führen kann.

Das Kompaktfilterelement 12 wird mit einer Dichtung versehen. Hierzu wird das Kompaktfilterelement 12 mit Polyurethan (PUR) umspritzt. Alternativ kann das Kompaktfilterelement 12 in einem Käfig mit einer Dichtung angeordnet werden.

Das Kompaktfilterelement 12 wird in das Filtergehäuse 16 eingesetzt.

Bei dem oben beschriebenen Ausführungsbeispiel eines Kompaktfilters 10 und eines Verfahrens zur Herstellung eines solchen sind unter anderem folgende Modifikationen möglich:

Die Erfindung ist nicht beschränkt auf die Verwendung bei Kompaktfiltern 10 für die Luftfiltration. Vielmehr kann sie auch bei Filtration von andersartigen gasförmigen oder flüssigen Fluiden, beispielsweise Wasser, Öl oder Kraftstoff, verwendet werden.

Die Erfindung kann eingesetzt werden bei Lastkraftwagen oder Personenkraftwagen oder anderen Kraftfahrzeugen. Aber auch ein Einsatz im industriellen Bereich, beispielsweise bei Industriemotoren, ist möglich.

Anstelle von beiden Filtermediumbahnen 20, 22 kann auch nur die glatte Filtermediumbahn 20 oder die gewellte Filtermediumbahn 22 aus einem Verbund aus einem Synthetikmaterial und einem Nicht-Synthetikmaterial bestehen.

Die Filtermediumbahnen 20, 22 können auch einen Verbund aus mehr als zwei Komponenten aufweisen.

Anstelle von Cellulose kann auch ein andersartiges Nicht-Synthetikmaterial, beispielsweise pflanzliches Material, verwendet werden.

Anstelle der Meltblown-Auflage 48 kann auch eine andersartige Synthetikauflage, beispielsweise eine Nanofaserbeschichtung, verwendet werden.

Der Verbund der Meltblown-Auflage 48 mit dem Celluloseträger 46 kann statt mittels Laminierung auch in andersartiger Weise, beispielsweise mittels Kalandrieren, vorzugsweise Thermo-Kalandrieren, oder Ultraschallverschweißung der Komponenten, erfolgen. Eine Ultraschallverschweißung der Komponenten kann vorzugsweise mit einer Schweiß-Punktdichte von mehr als 5 % des Flächenverbundes erfolgen.

Anstatt einer unimodalen Verteilung der Faserdurchmesser kann die Meltblown-Auflage 48 auch eine bimodale Verteilung der Faserdurchmesser mit wenigstens zwei unterschiedlichen mittleren Faserdurchmessern, beispielsweise von etwa 3 µm bis 20 µm und unter etwa 1 µm, aufweisen. In diesem Fall kann eine Schichtdicke des Synthetikmaterials etwa zwischen dem 25-fachen und dem 300-fachen des kleinsten mittleren Faserdurchmessers, beispielsweise zwischen 25 µm und 300 µm, betragen.

Sowohl bei der unimodalen als auch bei der bimodale Verteilung können auch größere oder kleinere Faserdurchmesser verwendet werden. Auch kann das Flächengewicht der Meltblown-Auflage 48 bei der unimodalen Verteilung der Faserdurchmesser vorzugsweise weniger als etwa 4 g/m² betragen.

Die glatte Filtermediumbahn 20 und die gewellte Filtermediumbahn 22 können statt entlang von durchgängigen Verbindungslinien auch entlang von unterbrochenen Verbindungslinien miteinander verbunden sein. Beispielsweise kann vorzugsweise an den Wellspitzen 24 der gewellten Filtermediumbahn 22 alle 10 mm eine 3 mm breite Schweißlinie realisiert werden. Hierzu kann eine speziell ausgestaltete Ultraschallsonotrode verwendet werden.

Statt mittels Hotmelt 30, 30' können die Gaskanäle 26, 26' auch in andersartiger Weise verschlossen sein. Beispielsweise können die Gaskanäle 26, 26' auch mittels Ultraschallschweißen zugeschweißt sein. So wird kein separater Klebstoff benötigt, da die ohnehin vorhandenen Meltblown-Auflagen 48 verwendet werden können.

Statt beiden Filtermediumbahnen 20, 22 kann auch nur eine oder keine der Filtermediumbahnen flammhemmende Eigenschaften aufweisen.

Die Riffelwalzen 56 und 58 können statt gerade auch schräg verzahnt sein. In diesem Fall können die Verbindungslinien entsprechend schräg zur Drehachse der Führungs-Riffelwalze verlaufen.

## Patentansprüche

1. Kompaktfilter (10), insbesondere Kompaktluftfilter für Kraftfahrzeuge, mit einem Kompaktfilterelement (12) zum austauschbaren Einsatz in einem Filtergehäuse (16), wobei das Kompaktfilterelement (12) einen Filterkörper (14) aus bahnförmigem Filtermedium (18) umfasst, bei dem wenigstens eine glatte Filtermediumbahn (20) und eine gewellte Filtermediumbahn (22) aufeinander gelegt und wenigstens bereichsweise mittels Ultraschallverschweißung miteinander verbunden sind, **dadurch gekennzeichnet, dass** wenigstens eine der Filtermediumbahnen (20, 22) aus einem Verbund aus wenigstens zwei Komponenten besteht, wobei wenigstens eine der Komponenten ein Synthetikmaterial (48) in Form einer Synthetikauflage, insbesondere einer Meltblown-Auflage (48), und wenigstens eine der Komponenten ein Nicht-Synthetikmaterial (46) in Form eines Trägers (46) aus pflanzlichem Material, insbesondere Cellulose, ist, und wobei die Verbund-Filtermediumbahn (20, 22) den Träger (46) aus pflanzlichem Material mit der der anderen Filtermediumbahn (22) zugewandten Synthetikauflage aufweist.

2. Kompaktfilter nach Anspruch 1, **dadurch gekennzeichnet, dass** die Verbund-Filtermediumbahn (20, 22) mittels Laminierung mit Klebstoffen oder mittels Kalandrieren oder Ultraschallverschweißung der Komponenten realisiert ist.

3. Kompaktfilter nach einem der vorigen Ansprüche, **dadurch gekennzeichnet, dass** der mittlere Durchmesser von Fasern des Synthetikmaterials (48) zwischen 0,5 µm und 20 µm beträgt.

4. Kompaktfilter nach einem der vorigen Ansprüche, **dadurch gekennzeichnet, dass** das Synthetikmaterial (48) eine unimodale Verteilung der Faserdurchmesser aufweist und eine Schichtdicke des Synthetikmaterials (48) etwa zwischen dem 50-fachen und dem 300-fachen des mittleren Faserdurchmessers beträgt.

5. Kompaktfilter nach einem der Ansprüche 1 bis 3, **dadurch gekennzeichnet, dass** das Synthetikmaterial eine bimodale Verteilung der Faserdurchmesser mit zwei unterschiedlichen mittleren Faserdurchmessern, insbesondere von 3 µm bis 20 µm und unter 1 µm, aufweist.

6. Kompaktfilter nach Anspruch 5, **dadurch gekennzeichnet, dass** eine Schichtdicke des Synthetikmaterials etwa zwischen dem 25-fachen und dem 300-fachen des kleinsten mittleren Faserdurchmessers, insbesondere zwischen 25 µm und 300 µm, beträgt.

7. Kompaktfilter nach einem der vorigen Ansprüche, **dadurch gekennzeichnet, dass** eine Schichtdicke des Nicht-Synthetikmaterials (46) etwa zwischen 150 µm und 660 µm beträgt.

8. Kompaktfilter nach einem der vorigen Ansprüche, **dadurch gekennzeichnet, dass** die glatte Filtermediumbahn (20) und die gewellte Filtermediumbahn (22) entlang von durchgängigen oder unterbrochenen Verbindungslinien miteinander verbunden sind.

9. Kompaktfilter nach einem der vorigen Ansprüche, **dadurch gekennzeichnet, dass** durch die glatte Filtermediumbahn (20) und die gewellte Filtermediumbahn (22) begrenzte Kanäle (26, 26') jeweils an einem Ende verschlossen, insbesondere mit Hotmelt (30, 30') abgedichtet oder mittels Ultraschallschweißen zugeschweißt, sind.

10. Kompaktfilter nach einem der vorigen Ansprüche, **dadurch gekennzeichnet, dass** wenigstens eine der Filtermediumbahnen (20, 22) flammhemmende Eigenschaften aufweist.

11. Verfahren zur Herstellung eines Kompaktfilters (10), insbesondere Kompaktluftfilters für Kraftfahrzeuge, mit einem Kompaktfilterelement (12) zum austauschbaren Einsatz in einem Filtergehäuse (16), bei dem ein Filterkörper (14) des Kompaktfilterelements (12) aus bahnförmigem Filtermedium (18) gestaltet wird, wobei wenigstens eine glatte Filtermediumbahn (20) und eine gewellte Filtermediumbahn (22) aufeinander gelegt und wenigstens bereichsweise mittels Ultraschallverschweißung miteinander verbunden werden, **dadurch gekennzeichnet, dass** wenigstens eine der Filtermediumbahnen (20, 22) aus einem Verbund aus wenigstens zwei Komponenten aufgebaut wird, wobei wenigstens eine der Komponenten ein Synthetikmaterial (48) in Form einer Synthetikauflage, insbesondere einer Meltblown-Auflage (48), und wenigstens eine der Komponenten ein Nicht-Synthetikmaterial (46) in Form eines Trägers aus pflanzlichem Material, insbesondere Cellulose (46), ist, wobei zur Herstellung der Verbund-Filtermediumbahn (20, 22) die Synthetikauflage auf den Träger aus pflanzlichem Material aufgebracht wird, wobei die Synthetikauflage auf der Seite des Trägers aufgebracht wird, die später anderen Filtermediumbahn (20, 22) zugewandt ist.

12. Filtermedium, insbesondere bahnförmiges Filtermedium (18), insbesondere eines Filterkörpers (14) eines Kompaktfilterelements (12) vorzugsweise zum austauschbaren Einsatz in einem Filtergehäuse (16) eines Kompaktfilters (10), insbesondere Kompaktluftfilters für Kraftfahrzeuge, bei dem wenigstens eine glatte Filtermediumbahn (20) und eine gewellte Filtermediumbahn (22) aufeinander gelegt und wenigstens bereichsweise mittels Ultraschallverschweißung miteinander verbunden sind, **dadurch gekennzeichnet, dass** wenigstens eine der Filtermediumbahnen (20, 22) aus einem Verbund aus wenigstens zwei Komponenten aufgebaut ist, wobei wenigstens eine der Komponenten ein Synthetikmaterial (48) in Form einer Synthetikauflage, insbesondere einer Meltblown-Auflage (48), und wenigstens eine der Komponenten ein Nicht-Synthetikmaterial (46)) in Form eines Trägers aus pflanzlichem Material, insbesondere Cellulose (46), ist, wobei die Verbund-Filtermediumbahn (20, 22) den Träger aus pflanzlichem Material mit der der anderen Filtermediumbahn (22) zugewandten Synthetikauflage aufweist.

## Claims

1. Compact filter (10), in particular compact air filter for motor vehicles, with a compact filter element (12) for an exchangeable use in a filter housing (16), wherein the compact filter element (12) comprises a filter body (14) made of web-shaped filter medium (18), where at least one smooth filter medium web (20) and one wavy filter medium web (22) are placed on top of each other and connected with each other at least in certain areas by means of ultrasonic welding, **characterized in that** at least one of the filter medium webs (20, 22) consists of a composite of at least two components, wherein at least one of the components is a synthetic material (48) in the form of a synthetic support, in particular a meltblown support (48), and at least one of the components a non-synthetic material (46) in the form of a carrier (46)made of vegetable material, in particular cellulose, and wherein the composite filter medium web (20, 22) features the carrier (46) made of vegetable material with the synthetic support facing the other filter medium web (22).

2. Compact filter according to claim 1, **characterized in that** the composite filter medium web (20, 22) is realized by means of lamination with adhesives or by means of calendering or ultrasonic welding of the components.

3. Compact filter according to one of the above claims, **characterized in that** the mean diameter of fibers of the synthetic material (48) is between 0.5 µm and 20 µm.

4. Compact filter according to one of the above claims, **characterized in that** the synthetic material (48) features a unimodal distribution of the fiber diameters and that a layer thickness of the synthetic material (48) is approximately between 50 times and 300 times that of the mean filter diameter.

5. Compact filter according to one of the claims 1 to 3, **characterized in that** the synthetic material features a bimodal distribution of the fiber diameter with two different mean fiber diameters, in particular from 3 µm to 20 µm and below 1 µm.

6. Compact filter according to claim 5, **characterized in that** a layer thickness of the synthetic material is approximately between 25 times and 300 times of the smallest mean fiber diameter, in particular between 25 µm and 300 µm.

7. Compact filter according to one of the above claims, **characterized in that** a layer thickness of the non-synthetic material (46) is approximately between 150 µm and 660 µm.

8. Compact filter according to one of the above claims, **characterized in that** the smooth filter medium web (20) and the wavy filter medium web (22) are connected with each other along uninterrupted or interrupted connecting lines.

9. Compact filter according to one of the above claims, **characterized in that** channels (26, 26') limited each by the smooth filter medium web (20) and the wavy filter medium web (22) are closed at one end, in particular with hotmelt (30, 30') or welded by means of ultrasonic welding.

10. Compact filter according to one of the above claims, **characterized in that** at least one of the filter medium webs (20, 20') features flame-retardant properties.

11. Method for manufacturing a compact filter (10), in particular compact air filters for motor vehicles, with a compact filter element (12) for an exchangeable use in a filter housing (16), where a filter body (14) of the compact filter element (12) is made of web-shaped filter medium (18), wherein at least one smooth filter medium web (20) and one wavy filter medium web (22) are placed on top of each other and connected with each other at least in certain areas by means of ultrasonic welding, **characterized in that** at least one of the filter medium webs (20, 22) is made of a composite of at least two components, wherein at least one of the components is a synthetic material (48) in the form of a synthetic support, in particular a meltblown support (48), and at least one of the components a non-synthetic material (46) in the form of a carrier made of vegetable material, in particular cellulose (46), wherein the synthetic support is applied to the carrier made of vegetable material for manufacturing the composite filter medium web (20, 22), wherein the synthetic support is applied on the side of the carrier which faces later on the other filter medium web (20, 22).

12. Filter medium, in particular web-shaped filter medium (18), in particular of a filter body (14) of a compact filter element (12) preferably for an exchangeable use in a filter housing (16) of a compact filter (10), in particular compact air filter for motor vehicles, where at least one smooth filter medium web (20) and one wavy filter medium web (22) are placed on top of each other and connected with each other at least in certain areas by means of ultrasonic welding, **characterized in that** at least one of the filter medium webs (20, 22) consists of a composite of at least two components, wherein at least one of the components is a synthetic material (48) in the form of a synthetic support, in particular a meltblown support (48), and at least one of the components a non-synthetic material (46) in the form of a carrier made of vegetable material, in particular cellulose (46), wherein the composite filter medium web (20, 22) features the carrier made of vegetable material with the synthetic support facing the other filter medium web (22).

## Revendications

1. Filtre compact (10), en particulier filtre à air compact pour véhicules automobiles, avec un élément de filtre compact (12) prévu pour une utilisation échangeable dans un boîtier de filtre (16), l'élément de filtre compact (12) comprenant un corps de filtre (14) constitué d'un milieu filtrant (18) sous forme de bande, dans lequel au moins une bande lisse de milieu filtrant (20) et une bande ondulée de milieu filtrant (22) sont superposées et reliées l'une à l'autre, au moins dans certaines zones, par soudage par ultrasons, **caractérisé en ce qu**'au moins l'une des bandes de milieu filtrant (20, 22) est composée d'un ensemble d'au moins deux composants, au moins l'un des composants étant une matière synthétique (48) sous forme de revêtement synthétique, notamment de revêtement en fibres fondues-soufflées (48), et au moins l'un des composants étant une matière non synthétique (46) sous forme de support (46) constitué d'une matière végétale, notamment de cellulose, et la bande composite de milieu filtrant (20, 22) étant pourvue du support (46) en matière végétale avec le revêtement synthétique dirigé vers l'autre bande de milieu filtrant (22).

2. Filtre compact selon la revendication 1, **caractérisé en ce que** la bande composite de milieu filtrant (20, 22) est réalisée par stratification avec des colles ou par calandrage ou soudage par ultrasons des composants.

3. Filtre compact selon l'une des revendications précédentes, **caractérisé en ce que** le diamètre moyen de fibres de la matière synthétique (48) se situe entre 0,5 µm et 20 µm.

4. Filtre compact selon l'une des revendications précédentes, **caractérisé en ce que** la matière synthétique (48) présente une répartition unimodale du diamètre des fibres et une épaisseur de couche de la matière synthétique (48) s'élevant approximativement à entre 50 fois et 300 fois le diamètre moyen des fibres.

5. Filtre compact selon l'une des revendications 1 à 3, **caractérisé en ce que** la matière synthétique présente une répartition bimodale des diamètres des fibres avec deux diamètres moyens différents des fibres, en particulier compris entre 3 µm et 20 µm et inférieur à 1 µm.

6. Filtre compact selon la revendication 5, **caractérisé en ce qu**'une épaisseur de couche de la matière synthétique s'élève approximativement à entre 25 fois et 300 fois le diamètre minimal des fibres et est en particulier comprise entre 25 µm et 300 µm.

7. Filtre compact selon l'une des revendications précédentes, **caractérisé en ce que** une épaisseur de couche de la matière non synthétique (46) s'élève approximativement à entre 150 µm et 660 µm.

8. Filtre compact selon l'une des revendications précédentes, **caractérisé en ce que** la bande lisse de milieu filtrant (20) et la bande ondulée de milieu filtrant (22) sont reliées l'une à l'autre le long de lignes de liaison continues ou discontinues.

9. Filtre compact selon l'une des revendications précédentes, **caractérisé en ce que** des canaux (26, 26') limités par la bande lisse de milieu filtrant (20) et la bande ondulée de milieu filtrant (22) sont obturés à une extrémité et sont en particulier étanchés avec un agent thermofusible (30, 30') ou fermés par soudage par ultrasons.

10. Filtre compact selon l'une des revendications précédentes, **caractérisé en ce qu**'au moins l'une des bandes de milieu filtrant (20, 22) a des propriétés ignifuges.

11. Procédé de fabrication d'un filtre compact (10), en particulier d'un filtre à air compact pour véhicules automobiles, avec un élément de filtre compact (12) prévu pour une utilisation échangeable dans un boîtier de filtre (16), un corps de filtre (14) de l'élément de filtre compact (12) étant constitué d'un milieu filtrant (18) sous forme de bande, au moins une bande lisse de milieu filtrant (20) et une bande ondulée de milieu filtrant (22) étant superposées et reliées l'une à l'autre, au moins dans certaines zones, par soudage par ultrasons, **caractérisé en ce qu**'au moins l'une des bandes de milieu filtrant (20, 22) est composée d'un ensemble d'au moins deux composants, au moins l'un des composants étant une matière synthétique (48) sous forme de revêtement synthétique, notamment de revêtement en fibres fondues-soufflées (48), et au moins l'un des composants étant une matière non synthétique (46) sous forme de support constitué d'une matière végétale, notamment de cellulose (46), et, aux fins de fabrication de la bande composite de milieu filtrant (20, 22), le revêtement synthétique étant appliqué sur le support en matière végétale, le revêtement synthétique étant appliqué du côté du support qui sera dirigé plus tard vers l'autre bande de milieu filtrant (20, 22).

12. Milieu filtrant, en particulier milieu filtrant (18) sous forme de bande, en particulier d'un corps de filtre (14) d'un élément de filtre compact (12), de préférence prévu pour une utilisation échangeable dans un boîtier de filtre (16) d'un filtre compact (10), en particulier d'un filtre à air compact pour véhicules automobiles, dans lequel au moins une bande lisse de milieu filtrant (20) et une bande ondulée de milieu filtrant (22) sont superposées et reliées l'une à l'autre, au moins dans certaines zones, par soudage par ultrasons, **caractérisé en ce qu**'au moins l'une des bandes de milieu filtrant (20, 22) est composée d'un ensemble d'au moins deux composants, au moins l'un des composants étant une matière synthétique (48) sous forme de revêtement synthétique, notamment de revêtement en fibres fondues-soufflées (48), et au moins l'un des composants étant une matière non synthétique (46) sous forme de support constitué d'une matière végétale, notamment de cellulose (46), et la bande composite de milieu filtrant (20, 22) étant pourvue du support en matière végétale avec le revêtement synthétique dirigé vers l'autre bande de milieu filtrant (22).
